# NEUE EUROPÄISCHE PATENTSCHRIFT

(11) **EP 0 243 680 B2**
(45) Veröffentlichungstag und Bekanntmachung des Hinweises auf die Entscheidung über den Einspruch: **13.04.1994**
(45) Hinweis auf die Patenterteilung: 03.04.1991
(21) Anmeldenummer: 87104442.6
(22) Anmeldetag: 25.03.1987
(51) Int. Cl.: G02B 21/06

(54) **Vorrichtung zur Auflichtbeleuchtung**
Bright field illumination device
Dispositif d'éclairage sur fond clair

(30) Priorität: 23.04.1986 DE 3613750
(43) Veröffentlichungstag der Anmeldung: 04.11.1987
(73) Patentinhaber: SIEMENS AKTIENGESELLSCHAFT, 80333 München (DE)
(72) Erfinder: Mehdianpour, Mohammad, D-8011 Baldham (DE); Grasmüller, Hans, D-8083 Mammendorf (DE)

(56) Entgegenhaltungen:
- AT-A- 0 125 434
- AT-A- 0 297 369
- DE-A- 2 542 075
- DE-A- 3 208 753
- DE-A- 3 229 768
- DE-C- 0 921 414
- FR-A- 2 433 767
- US-A- 4 127 318
- IBM TECHNICAL DISCLOSURE BULLETIN, Band 27, Nr. 5, Oktober 1984, Seite 3025, New York, US; D.S. GOODMAN: "Darkfield illuminator attachment"

## Beschreibung

Der Erfindung betrifft eine Vorrichtung zur Lageerkennung von Leiterbahnen oder Justierstrukturen auf Leiterplatten nach dem Oberbegriff des Patentanspruchs 1.

In der QualitätsKontrolle, besonders bei Kunststoff- und Stanzteilen, Steckern und Steckerleisten. Kontakten und anderen kleinen Elektrobauteilen, Glas-, Keramik-, Drehund Maschinenleiten werden an Bildanalyse-Systeme angeschlossene Halbleiterkameras eingesetzt, die beispielsweise x-, Y- und Z-Koordinaten auf schnellstem Wege als eine Kombination von Meßtischposition und schneller Bildanalyse ermitteln können (VIDICOM-System der Fa. C. E. Johansson. Schweden). Telezentrische Optiken gewährleisten dabei genaue Messungen, unabhängig von Fokussierung und Art der gewählten Lichtquelle. Hierdurch wird insbesondere ein konstanter, großer Arbeitsabstand ermöglicht. Als integriertes Auflicht erlaubt die Beleuchtung eine einlache Kontrolle von Sacklöchern und Vertiefungen. Hierbei fällt das Licht zentriert und rechtwinklig durch die Optik auf das Objekt. Es kann jedoch auch eine Beleuchtungseinheit eingesetzt werden, die aus vier externen schräggestellten fiberopüschen Lichtquellen und einer Fresnel-Linse besteht und maximale Schärfe und maximalen Arbeitsabstand bei einem festgelegten Einfaliswinkel ergeben soll. Von dieser bekannten Vorrichtung wird im Oberbegriff des Anspruchs 1 ausgegangen.

Aus der US-A-4127318 ist bereits eine Beleuchtungsvorrichtung für Mikroskope bekannt, welche einen schnellen Wechsel zwischen einer Auflichtbeleuchtung mit senkrecht einfallenden Strahlen und einer Auflichtbeleuchtung mit allseitig schräg einfallenden Strahlen ermöglicht.

Bei der automatischen Bestückung von Leiterplatten mit planaren Bauelementen werden die Bauelemente von einem Bestückkopf aus den entsprechenden Zuführungen entnommen und dann in den vorgegebenen Bestückpositionen auf den im Bestückbereich ortsfest zentrierten Leiterplatten abgesetzt. Um gewisse Abweichungen in der ortsfesten Zentrierung der Leiterplatten selbsttätig kompensieren zu können, soll mit Hilfe von Halbleiterkameras und Bildanalyse-Systemen die Lage entsprechender Justierstrukturen auf der Leiterplatte erkannt werden. Eine derartige Lageerkennung führt jedoch sowohl bei senkrecht einfallendem Auflicht als auch bei schräg einfallendem Auflicht zu unbefriedigenden Ergebnissen. In beiden Fällen wird stets nur ein Teil der verzinnten Leiterbahnen bzw. Justierstrukturen von der Halbleiterkamera exakt erfaßt und im Bildanalyse-System richtig ausgewertet.

Der Erfindung liegt die Aufgabe zugrunde, eine Vorrichtung zur Auflichtbeleuchtung der Objektoberfläche eines von einem Bildwandler zu erfassenden Objekts zu schaffen, mit welcher auch bei Leiterplatten mit verzinnten Leiterbahnen oder Justierstrukturen eine blend- und schattenfreie Ausleuchtung der Strukturen ermöglicht wird.

Diese Aufgabe wird bei einer gattungsgemäßen Vorrichtung durch die im Patentanspruch 1 angegebenen Merkmale gelöst.

Der Erfindung liegt die Erkenntnis zugrunde. daß bei Leiterplatten durch das Verzinnen Strukturen mit balligen und ebenen Oberflächen entstehen können und daß durch eine geeignete Kombination von senkrechtem und unter einem großen Raumwinkel allseitig schräg einfallendem Licht die Objektoberflächen so ausgeleuchtet werden, daß ballige und ebene Oberflächen gleich abgebildet werden. Durch die Kombination beider Autlichtbeleuchtungen werden die ebenen oder balligen verzinnten Strukturen stets hell auf dunklem Grund und mit scharfen Konturen abgebildet. Die Erkennung einer Struktur, wie z. B. eines Anschlußpads oder einer Justiermarke kann dann dementsprechend auch bei unterschiedlicher Oberflächenbeschaffenheit der Leiterplatten durch die gleiche Erkennungsvorschrift problemlos vorgenommen werden.

Vorteilhafte Ausgestaltungen der Erfindung gehen aus den Ansprüchen 2 bis 5 hervor.

Im folgenden werden Ausführungsbeispiele der Erfinung anhand der Zeichnung näher erläutert.

Es zeigen
- Fig. 1: das Grundprinzip der erfindungsgemäßen Vorrichtung zur Auflichtbeleuchtung,
- Fig. 2: eine erste Ausführungsform mit einer zentrisch durchbohrten Fresnel-Linse in stark vereinfachter schematischer Darstellung und
- Fig. 3: eine als Vorsatz eines Bildwandlers ausgebildete zweite Ausführungsform im Längsschnitt.

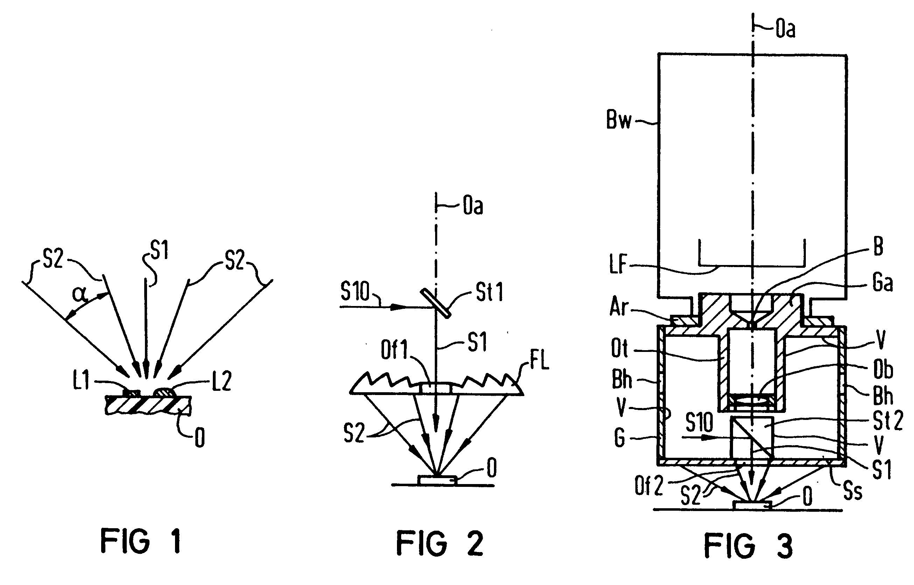

In Fig. 1 ist mit O ein Objekt bezeichnet, bei welchem es sich um eine Leiterplatte mit verzinnten Leiterbahnen bzw. Justierstrukturen handeln soll. Auf der Objektoberfläche befinden sich in dem dargestellten Bereich eine erste verzinnnte Leiterbahn L1 mit ebener Oberfläche und daneben eine zweite verzinnte Leiterbahn L2, bei welcher sich durch das Verzinnen eine ballige Oberfläche ausgebildet hat. Eine gleichmäßige, blend- und schattenfrei Ausleuchtung derartiger balliger und ebener Oberflächen wird durch die gleichzeitigs Beaufschlagung der Oberfläche des Objekts O mit senkrecht einfallenden Strahlen S1 und mit allseitig schräg einfallenden Strahlen S2 erreicht. Der mit α bezeichnete Winkel zwischen den allseitig schräg einfallenden Strahlen S2 sollte dabei so groß sein, daß die Beleuchtungsapertur mindestens gleich der Beobachtungsapertur des verwendeten Bildwandlers ist.

Fig. 2 zeigt rein schematisch eine erste Möglichkeit zur Erzeugung der senkrecht einfallenden Strahlen S1 und der allseitig schräg einfallenden Strahlen S2. Zur Bildung der senkrecht einfallenden Strahlen S1 wird seitlich einfallendes Licht S10 durch einen als teildurchlässigen Spiegel ausgebildeten Strahlteiler St1 in Richtung der Objektivachse Oa eines in Fig. 2 nacht näher dargestellten Bildwandlers und durch die zentrale Öffnung Of1 einer Fresnel-Linse FL hindurch auf die Oberfläche des Objekts O gelenkt. Die Fresnel-Linse FL besteht aus einem zentralen Teil in Form einer normalen dünnen Linse mit der zentralen Öffnung Of1 und aus ringförmigen Zonen, die den zentralen Teil umgeben und die alle den gleichen Brennpunkt und etwa die gleiche Dicke haben wie der zentrale Teil. Die Strahlen S1 werden dabei beispielsweise durch die entsprechende Strahlumlenkung von oben senkrecht auf die Fresnel-Linse FL auftreffenden Strahlen gebildet.

Fig. 3 zeigt einen as Halbleiterkamera bzw. CCD-Kamera ausgebildeten Bildwandler Bw. dessen lichtempfindliche Fläche mit den in Reihe und Spalten angeordneten Elementen mit LF bezeichnet ist. Auf der Unterseite des Bildwandlers Bw ist in das Gewinde für den normalen Objektivtubus der Gewindeansatz Ga eines kreiszylindrischen, hohlen Gehäuses G eingeschraubt wobei zwischen Bildwandler Bw und Gehäuse G ein Anschlagring Ar festgeklemmt ist. Im Bereich des Gewindeansatzes Ga ist eine Blende B für telezentrischen Strahlengang eingebracht, wobei sich an diese Blende B nach unten ein Objektivtubus Ot mit einem Objektiv Ob anschließt. Der Objektivtubus Ot ragt koaxial in das Gehäuse G. d. h, das Gehäuse G ist dementsprechend auch koaxial zur Objektivachse Oa des Bildwandlers Bw ausgerichtet.

Den unteren Abschluß des kreiszylindrischen Gehäuses G bildet eine aus Milchglas bestehende Streuscheibe Ss welche ein zentrale, koaxial zur Objektivachse Oa liegende Öffnung Of2 besitzt. Unmittelbar über die Öffnung Of2 und unter dem Objektivtubus Ot befindet sich ein als Strahlteilerwürfel ausgebildeter Strahlteiler St2, welcher seitlich aus einer Richtung einfallendes Licht S10 senkrecht auf die Oberfläche des Objekts umlenkt. wobei die senkrecht einfalenden Strahlen wie bereits in den Fig. 1 und 2 mit S1 bezeichnet sind.

In dem Mantel des Gehäuses G befinden sich auf gegenüberliegenden Seiten Bohrungen Bh, in welche in Fig. 3 nicht näher dargestellte Halogen-Lampen als Lichtquellen eingesetzt werden. Die Innenwandung des Gehäuses G und die Außenfläche des Objektivtubus Ot sind verspiegelt, wobei die Verspiegelung jeweils durch das Bezugszeichen V aufgezeigt ist. Aufgrund dieser Verspiegelung V, die auch auf drei Seitenflächen des Strahlteilers St2 aufgebracht ist, wird das von den Lichtquellen erzeugte Licht derart oft reflektiert, daß durch die Streuscheibe Ss hindurch die allseitig schräg auf die Oberfläche des Objekts O auftreflenden Strahlen S2 hindurchtreten. Im übrigen sorgen die Lichtquellen aufgrund der vielfältigen Reflexionen auch für das seitlich in den Strahlteiler St2 einfallende Licht S10, d. h., für die Erzeugung der senkrecht einfallenden Strahlen S1 ist keine gesonderte Lichtquelle erforderlich.

Bei der vorstehend beschriebenen Vorrichtung kann anstelle der Streuscheibe Ss auch die in Fig. 2 dargestellte Fresnel-Linse FL verwendet werden.

Der Einsatz des in Fig. 3 dargestellten Bildwandlers Bw mit der als Vorsatz ausgebildeten Vorrichtung zur Auflichtbeleuchtung erfolgt bei der automatischen Bestükkung von Leiterplatten. Hier werden in Verbindung mit geeigneten Bildanalyse-Systemen Justierstrukturen auf den Leiterplatten erkannt, so daß die Bewegungen des Bestückkopfes beim Absetzen der Bauelemente entsprechend den gegebenenfalls festgestellten Lageabweichungen der Leiterplatte selbsttätig korrigiert werden können.

## Patentansprüche

1. Vorrichtung zur Lageerkennung von Leiterbahnen oder Justierstrukturen (L1, L2) auf Leiterplatten (0) mit einem mit einem Objektiv (06) ausgerüsteten Bildwandler (Bw) und mit einer mit mindestens einer Lichtquelle ausgerüsteten Einrichtung zur Auflichtbeleuchtung der Leiterplattenoberfläche,
dadurch gekennzeichnet,
daß die Einrichtung zur Auflichtbeleuchtung Mittel zur gleichzeitigen Beaufschlagung der Leiterplattenoberfläche mit senkrecht einfallenden Strahlen (S1) und mit allseitig schräg einfallenden Strahlen (S2) umfaßt,
wobei die Mittel eine Linse oder eine Streuscheibe (Ss) zur Beaufschlagung der Leiterplattenoberfläche mit den allseitig schräg einfallenden Strahlen (Sz) aufweisen,
wobei die Linse oder die Streuscheibe (Ss) den unteren Abschluß eines am Bildwandler (Bw) angebrachten Gehäuses (G) bildet, in welches der Objektivtubus (Ot) des Bildwandlers (Bw) koaxial hineinragt und in dessen Mantel mindestens eine Lichtquelle eingesetzt ist,
und wobei im Gehäuse (G) unterhalb des Objektius (Ob) ein Strahlteiler (St1; St2) angeordnet ist, über den seitlich einfallendes Licht durch eine zentrale, koaxial zur Objektivachse (Oa) liegenden Öffnung (Of1; Of2) der Linse oder der Streuscheibe (Ss) in Richtung der Objektivachse (Oa) senkrecht auf die Leiterplattenoberfläche gelenkt wird.

2. Vorrichtung nach Anspruch 1, dadurch gekennzeichnet, daß die Linse als Fresnel-Linse (FL) ausgebildet ist.

3. Vorrichtung nach Anspruch 1 oder 2, dadurch gekennzeichnet, daß das Gehäuse (G) kreiszylindrisch mit verspiegelter Innenwandung ausgebildet ist.

4. Vorrichtung nach Anspruch 3, dadurch gekennzeichnet, daß die Außenfläche des Objektivtubus (Ot) verspiegelt ist.

5. Vorrichtung nach einem der vorhergehenden Ansprüche, dadurch gekennzeichnet, daß das Gehäuse (G), der Objektivtubus (Ot), der Strahlteiler (St2) und die Linse oder die Streuscheibe (Ss) eine als Vorsatz am Bildwandler (Bw) befestigte Einheit bilden.

## Claims

1. Device for the positional detection of conductor tracks or adjusting structures (L1, L2) on circuit boards (O) having an image converter (Bw), equipped with an objective (Ob), and having a device, equipped with at least one light source, for bright-field illumination of the circuit board surface, characterized in that the device for bright-field illumination comprises means for simultaneously applying perpendicularly incident rays (S1) and rays (S2) obliquely incident on all sides to the circuit board surface, the means having a lens or a diffusion disc (Ss) for applying the rays (S2) obliquely incident on all sides to the circuit board surface, the lens or the diffusion disc (Ss) forming the lower closure of a housing (G) attached to the image converter (Bw) into which housing the objective tube (Ot) of the image converter (Bw) protrudes coaxially and in the shell of which housing at least one light source is inserted, and there being arranged in the housing (G) underneath the objective (Ob) a beam divider (St1; St2), via which laterally incident light is deflected through a central aperture (Of1; Of2), located coaxially with respect to the objective axis (Oa), of the lens or of the diffusion disc (Ss) in the direction of the objective axis (Oa) perpendicularly onto the circuit board surface.

2. Device according to Claim 1, characterized in that the lens is constructed as a Fresnel lens (FL).

3. Device according to Claim 1 or 2, characterized in that the housing (G) is constructed as a circular cylinder with reflective inside wall.

4. Device according to Claim 3, characterized in that the outer surface of the objective tube (Ot) is reflective.

5. Device according to one of the preceding claims, characterized in that the housing (G), the objective tube (Ot), the beam divider (St2) and the lens or the diffusion disc (Ss) form a unit attached as adaptor to the image converter (Bw).

## Revendications

1. Dispositif de reconnaissance de couches de pistes conductrices ou de reconnaissance de couches de structure d'ajustage (L1, L2) sur des plaquettes à circuits imprimés (O), à l'aide d'un convertisseur d'images (Bw) muni d'un objectif (Ob), et à l'aide d'un dispositif d'éclairage incident de la surface des plaquettes à circuits imprimés muni d'au moins une source lumineuse, caractérisé en ce que le dispositif d'éclairage incident comporte des moyens pour envoyer simultanément sur la surface des plaquettes à circuits imprimés, des faisceaux incidents normaux (S1) et des faisceaux incidents inclinés de tous côtés (S2),
du type dans lequel les moyens comportent une lentille ou un disque de dispersion (Ss) pour envoyer sur la surface des plaquettes à circuits imprimés les faisceaux incidents (S2) inclinés de tous côtés,
du type dans lequel la lentille ou le disque de dispersion (Ss) forme la fermeture inférieure d'un boîtier (G) qui est appliqué sur le convertisseur d'images (Bw) et dans lequel le tube d'objectif (Ot) du convertisseur d'images (Bw) fait saillie coaxialement, et dans la surface latérale duquel est montée au moins une source lumineuse, et
du type dans lequel, dans le boîtier (G), à l'intérieur de l'objectif (Ob) , est monté un séparateur de faisceau (St1; St2), par l'intermédiaire duquel de la lumière incidente latéralement est déviée, dans la direction de l'axe de l'objectif (Oa), perpendiculairement à la surface des plaquettes à circuits imprimés, par une ouverture centrale (Of1; Of2) de la lentille ou du disque de dispersion, coaxiale à l'axe de l'objectif (Oa).

2. Dispositif suivant la revendication 1,
caractérisé en ce que la lentille est une lentille de Fresnel (FL).

3. Dispositif suivant la revendication 1 ou 2,
caractérisé en ce que le boîtier (G) est cylindrique de section circulaire et est à paroi intérieure réfléchissante.

4. Dispositif suivant la revendication 3,
caractérisé en ce que la surface extérieure du tube d'objectif (Ot) est réfléchissante.

5. Dispositif suivant l'une des revendications précédentes,
caractérisé en ce que le boîtier (G), le tube d'objectif (Ot), le séparateur de faisceau (St2) et la lentille ou le disque de dispersion (Ss) forment une unité qui est fixée au convertisseur d'images (Bw), en tant qu'adaptateur.
